# EUROPEAN PATENT SPECIFICATION

(11) **EP 4 206 446 B1**
(45) Date of publication and mention of the grant of the patent: **04.06.2025**
(21) Application number: 22216713.2
(22) Date of filing: 27.12.2022
(51) Int. Cl.: F02B 29/04, F02B 37/16

(54) **AIR INTAKE SYSTEM FOR A VEHICLE'S INTERNAL COMBUSTION ENGINE**
LUFTEINLAUFSYSTEM FUR EINEN VERBRENUNGSMOTOR EINES FAHRZEUGS
SYSTEME D'ADMISSION D'AIR POUR LE MOTEUR A COMBUSTION INTERNE D'UN VEHICULE

(30) Priority: 31.12.2021 PL 44005421
(43) Date of publication of application: 05.07.2023
(73) Proprietor: Akademia Gorniczo-Hutnicza im. Stanislawa Staszica w Krakowie, 30-059 Krakow (PL)
(72) Inventor: JANOWSKI, Miroslaw, 30-237 Kraków (PL)
(74) Representative: Kuczynska, Teresa

(56) References cited:
- EP-A1- 1 365 125
- CN-A- 112 012 826
- US-A1- 2002 073 696
- US-A1- 2011 155 112
- US-A1- 2016 169 161
- US-B1- 6 405 692
- US-B1- 7 100 584
- US-B2- 7 254 948
- US-B2- 8 136 513

## Description

The invention relates to is an air intake system for an internal combustion engine of a vehicle for use in the automotive industry, particularly in the construction of internal combustion supercharged engines supercharged by a turbo-supercharger and a mechanical compressor.

The use of a turbo-supercharger unit, which utilizes energy of exhaust gases to compress the inlet air in reciprocating internal combustion engines, both in spark-ignition SI engine and compression-ignition CI engine, makes it possible to obtain more power for a given engine displacement volume unit. Apart from benefits in a performance such a turbo-supercharging also brings technical problems due to the gas-dynamic relationship of exhaust gas output rate and the air demand, with the inertia of a rotating combined mass of a turbine, a shaft and a compressor rotor. The main problems are the phenomena popularly called by practitioners: "turbo lag" and "pumping". "Turbo lag" is the delay time between the action of increasing a load and a response of the engine, that is the delay between the instantaneous exhaust gas output rate and the air demand occurring at that moment. It results from the inertia of the mass of the rotating components of the turbo-supercharger and the volume of an air inlet ducts and an intermediate cooler that is built-in into the inlet duct between a turbine and an intake manifold. "Pumping" in a spark-ignition SI engine occurs when an air throttle is closed causing an increase in a pressure in the intake duct on the pressure side of a compressor, while downstream of the throttle both a drop of the mixture pressure and a drop of a temperature below the ignition temperature occur; the resulting lean mixture of fuel burns with detonations in the exhaust system. In a compression-ignition CI engine an increase in a pressure and in a temperature in a combustion chambers with simultaneous depletion of the mixture with a small dose of a fuel occurs. "Pumping" in a spark-ignition SI engine most often is eliminated by means of use of a bypass duct, which extends out from the intake duct downstream of a compressor and, if possible, downstream of an intermediate cooler, and which is connected back upstream the compressor. A circulation valve controlled by a two-position electromagnetic actuator by the signal of the air flow sensor in the intake duct is built into the bypass duct. Such a solution is presented, among others, in the European patent PL/EP1941138B1 specification, that is provided with a circulation valve having a pressure equalizing design on both sides of a shutoff element, with a preferred reduction of an the opening force of the electromagnet. In a compression-ignition CI engine, when the fuel dose is reduced, a bleed valve built into the intake duct downstream the compressor releases over-pressure to the atmosphere. In both cases, a valve action reduces a sudden loading of the compressor by a pressure surge on the pressure side, which allows the turbine to maintain a relatively high speed of rotation during open-valve operation and reduces an energy and time of increasing the compressor speed of rotation following the increasing the loading. In addition to the above-described solutions for improving operation of the turbocharger in a reciprocating internal combustion engine, solutions utilizing a digital technology to control a flow of exhaust gases and air through a turbocharger on the basis of a software analysis of engine operating parameters are also known. For example, mention can be made of the solutions presented in patents PL/EP1741895B1, PL/EP2488732B1, PL167486B1.

A method of controlling a speed of rotation of a turbocharger is disclosed in the Polish patent No. P.435784 which is supercharging of a reciprocating internal combustion engine, wherein this controlling is implemented in a system containing an intake duct and a bypass duct equipped with a circulation valve and led out from the intake duct downstream of a compressor and an intermediate cooler, and connected back to the inlet duct upstream the compressor. In a bypass duct a circulation valve controlled by an electric actuator according to an output signal from a digital computing system, the signal which is determined by a software for processing input signals of engine operating parameters, including those from built in the intake duct: an airflow sensor in a spark-ignition SI engine or a pressure sensor in a compression-ignition CI engine.

The present invention solves a technical problem that occurs in engines equipped with compressors, particularly with turbochargers (turbosuperchargers) consisting in that a delay occurs, so-called "turbo lag", between pressing an accelerator pedal and a response of the engine. This results from the inertia of a compressor/turbo-supercharger, a volume of an air intake ducts and a cooler between a turbine and an inlet to engine cylinders. For proper operation of the turbo-supercharger in order to generate a proper boost pressure, it is necessary to burn some additional fuel dose to obtain an exhaust gas for driving the turbo-supercharger.

The air intake system for an internal combustion engine of a vehicle includes an intake duct and a bypass duct, wherein the bypass duct is led out from the inlet duct downstream the compressor and charging air cooler and upstream the pressure sensor in a spark-ignition SI engine or upstream the throttle valve in a compression-ignition CI engine, and it is connected back to the intake duct upstream the compressor, wherein in the bypass duct a circulation valve connected by wire or wireless connection to a digital computing and controlling system is provided, and further wherein the essence of which the system consists in that the circulation valve is the exhaust gas recirculation EGR valve and the digital computing and controlling system is an electronic control unit ECU of a vehicle.

Preferably the computing and controlling system has a software and settings of threshold values of the circulation valve that are the same as for the operation mode of the exhaust gas recirculation EGR valve installed in the conduit originally connecting the exhaust duct to the intake duct.

In order to avoid engine malfunctions, preferably, the bypass duct is connected back to the intake duct between the compressor and the air flow sensor or the boost pressure sensor.

Advantageously by using the invention one can maintain the turbo-supercharger at a relatively high speed of rotation all the time in an idling range, low or medium load range of the engine with no need to be accelerated in any case when a demand for more power occurs i.e. greater boost pressure. This allows the engine to get the required power faster i.e. it reduces so-called "turbo lag." Additional advantage of using the exhaust gas recirculation EGR valve as an air circulation valve according to the invention is that the air circulating in a closed circuit (the compressor, the cooler, the bypass duct with EGR valve, the compressor) repeatedly passes through the cooler which allowing for deeper cooling of the air, and consequently lowering the temperature of the supercharging air, that results in increasing the engine power and efficiency.

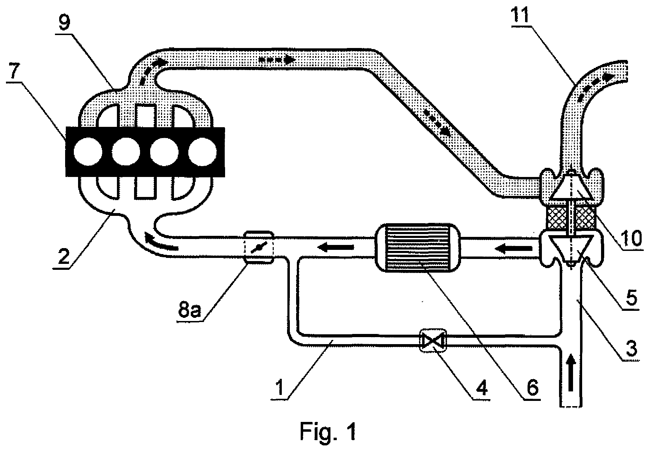

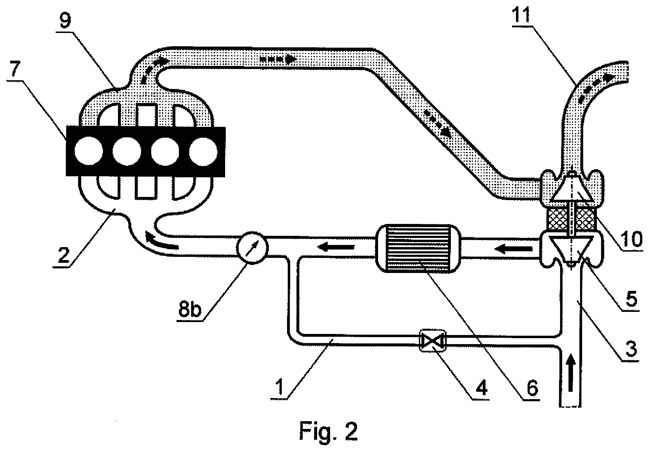

The solution of the invention is presented in embodiment in the drawing, in which Fig. 1 shows in a simplified manner an air intake system for a spark-ignition SI internal combustion engine, and Fig. 2 - an air intake system for a compression-ignition CI internal combustion engine.

The air intake system for the spark-ignition SI internal combustion engine (Fig. 1) includes a bypass duct 1 connecting an intake manifold 2 to air intake duct 3. In the bypass duct 1, a circulation valve 4 with electromagnetic control unit is installed, which is a valve originally serving as an exhaust gas recirculation EGR valve in the known system. A compressor 5 in the air intake duct 3 at its air intake side is provided and followed by a charging air cooler 6 and a throttle 8a connected to the electronic control unit ECU of the vehicle. The bypass duct 1 is led out from the intake duct 3 downstream the compressor 5 and the charging air cooler 6 and upstream the throttle 8a, and it is connected back to the intake duct 3 between the compressor 5 and the air flow sensor, not shown in the drawing. The circulation valve 4 is connected by a signal wire to a digital computing and controlling system, not shown in the drawing, which is an electronic control unit ECU of the vehicle, equipped with a software and settings of the threshold values of the circulation valve 5, which are the same as those for the operating mode of the exhaust gas recirculation EGR valve that originally is installed on the conduit connecting the exhaust gas outlet duct 11 to the air intake duct 3. The exhaust gas outlet duct 11 is connected on one side to the exhaust gas outlet manifold 9 and is provided with a turbine 10, connected by means of a common shaft to the compressor 5.

In the second example of the air intake system for a compression-ignition CI internal combustion engine (Fig. 2) the difference is in that the bypass duct 1 is led out from the intake duct 3 downstream the compressor 5 and the charging air cooler 6 and upstream the pressure sensor 8b, and it is connected back to the inlet duct upstream the compressor 5.

The operation of the air intake system for an internal combustion engine of a vehicle consists in that the EGR valve, acting as a recirculation valve 4, partially takes over the function of controlling the boost pressure of the internal combustion engine 7. In a standard system with exhaust gas recirculation, the exhaust gas recirculation EGR valve opens at idle run and at low engine loads in order to apply a dose of exhaust gas to the cylinders which aims to reduce the amount of nitrogen oxides in the exhaust gas. In the present invention the EGR valve is also opened fully or partially at a partial load of the engine as well as at idle run, due to the same controlling by the electronic control unit ECU of the vehicle. When the EGR valve is open, the air flow is directed in the opposite direction to the direction of flow of an exhaust gas in a normally operating EGR valve. When the EGR valve is open (low load, idle run), a part of the air is returned back through the EGR valve upstream the compressor 5.

The compressor 5 has lower resistance and therefore operates at a higher speed of rotation (revs), with greater flow, that is, with greater efficiency. The part of the air required by the engine 7 is taken from the air filter and is delivered to the cylinders, whereas the remaining part thereof circulates in the closed circuit of the circulation circuit: the compressor 5 - the cooler 6 - the circulation valve 4, and is cooled continuously all the time, and when the circulation valve 4 is closed due to its inertia and the inertia of the accelerated turbo-supercharger, the pressure in the intake duct 3 increases quickly, because there is no need to overcome the high inertia of the air column and to accelerate of the turbo-supercharger 5 because it already has a higher speed of rotation.

Due to the actuator element for controlling the air flow in the intake system - the circulation valve 4 is the EGR valve that is usually in the given drive unit, it does not require any modification except of closing only of the exhaust gas outlet duct 11 of the exhaust manifold 9 of the exhaust gas towards the EGR valve, wherein the exhaust gas input to the EGR valve should be connected to a pipe tee located in the air intake duct 3 between the air filter and the compressor 5. The EGR valve is controlled by a system for monitoring the operating state of the engine which system analyzes the following parameters: engine speed of rotation and its change, accelerator pedal and clutch pedal positions, boost pressure and air flow to the engine, wherein it is also possible to modify to some extent the closing and opening thresholds of the EGR valve operating as the circulation valve 4 of the boost air of the internal combustion engine 1. The connection of the bypass duct 1 on the other side of the EGR valve remains unchanged and is generally located as close as possible to the intake manifold 2. In such a manner a circulation circuit is created that bypasses component elements that can allow the ECU to calculate the mass of the air fed to the engine, such as a flow meter or a boost pressure sensor, in order to prevent the engine operation from being affected.

## Claims

1. (amended) Air intake system for an internal combustion engine of a vehicle, comprising an intake duct (3) and a bypass duct (1), wherein the bypass duct (1) is led out from the intake duct (3) downstream a compressor (5) and a boost air cooler (6) and upstream a throttle (8a) in a spark-ignition SI engine (7) or upstream a pressure sensor (8b) in a compression-ignition CI engine (7) and connected back to the intake duct (3) upstream the compressor (5), and wherein in the bypass duct (1) a circulation valve (4) is provided and connected by wire or wireless connection to a digital computing and controlling system, as the circulation valve (4), an exhaust gas recirculation EGR valve is used which exhaust gas recirculation EGR valve originally is installed on the conduit connecting an the exhaust gas outlet duct (9) to the air intake duct (3) wherein the exhaust gas outlet duct (9) of an exhaust manifold of the exhaust gas towards the EGR valve is closed, and wherein the exhaust gas input to the EGR valve is connected to a pipe tee located in the air intake duct (3) and further wherein the digital computing and controlling system is constituted by an electronic control unit ECU of the vehicle, which electronic control unit ECU of the vehicle is equipped with a software and settings of the threshold values of the circulation valve (4), which are the same as those for the operating mode of the exhaust gas recirculation EGR valve that originally is installed on the conduit connecting the exhaust gas outlet duct (9) to the air intake duct (3).

2. The system according to claim. 1, **characterized in that**, the air intake system for an internal combustion engine (7) of a vehicle consists **in that** the EGR valve acting as the recirculation valve (4), partially takes over the function of controlling the boost pressure of the internal combustion engine (7), the EGR valve acting as the circulation valve is also opened fully or partially at a partial load of the engine (7) as well as at its idle run, due to the same controlling by the electronic control unit ECU of the vehicle being the computing and controlling system that is provided with software and settings of the threshold values of the circulation valve (4) that are the same as these for the mode of operation of the exhaust gas recirculation EGR installed in the conduit connecting the exhaust duct (9) to the intake duct (3) .

3. The system according to claim. 1, **characterized in that** the bypass duct (1) is connected back to the intake duct (3) between the compressor (5) and an air flow sensor or a boost pressure sensor.

## Patentansprüche

1. Luftansaugsystem für einen Verbrennungsmotor eines Fahrzeugs, umfassend einen Luftansaugkanal (3) und einen Bypasskanal (1), wobei der Bypasskanal (1) stromabwärts eines Verdichters (5) und eines Ladeluftkühlers (6) und stromaufwärts einer Drossel (8a) in einem Fremdzündungs-SI-Motor (7) oder stromaufwärts eines Drucksensors (8b) in einem Kompressionszündungs-CI-Motor (7) aus dem Luftansaugkanal (3) herausgeführt und stromaufwärts des Verdichters (5) mit dem Luftansaugkanal (3) zurückverbunden ist, und in dem Bypasskanal (1) ein mit einem digitalen Rechen- und Steuersystem drahtgebundenes oder drahtlos verbundenes Zirkulationsventil (4) vorgesehen ist, wobei das Zirkulationsventil (4) ein EGR-Abgasrückführungsventil ist, das ursprünglich an einer einen Abgasauslasskanal (9) mit dem Luftansaugkanal (3) verbindenen Leitung installiert ist, wobei der Abgasauslasskanal (9) eines Abgaskrümmers in Richtung des EGR-Ventils geschlossen ist und ein Abgaseinlass des EGR-Ventils mit einem im Lufteinlasskanal (3) angeordneten T-Stück verbunden ist, wobei das digitale Rechen- und Steuersystem eine elektronische Steuereinheit ECU des Fahrzeugs ist, das Software und Einstellungen der Schwellenwerte des Zirkulationsventils (4) aufweist, die denjenigen für das Betriebsmodus des EGR-Abgasrückführungsventils, das ursprünglich an der die Abgasauslasskanal (9) mit dem Luftansaugkanal (3) verbindenden Leitung installiert ist, gleich sind.

2. Luftansaugsystem nach Anspruch 1, **dadurch gekennzeichnet, dass** das Luftansaugsystem für einen Verbrennungsmotor (7) eines Fahrzeugs darin besteht, dass das als Rezirkulationsventil (4) wirkende EGR-Ventil teilweise die Funktion der Ladeluftdrucksteuerung des Verbrennungsmotors (7) aufnimmt, und das als Zirkulationsventils wirkende EGR-Ventil bei nicht vollständigen Belastung des Verbrennungsmotors (7) sowie beim Freilauf auch vollständig oder teilweise geöffnet ist, aufgrund der gleichen Steuerung durch die elektronische Steuereinheit ECU des Fahrzeugs, die das Rechen- und Steuersystem bildet, das Software und Einstellungen der Schwellenwerte des Zirkulationsventils (4) aufweist, die denjenigen für das Betriebsmodus des EGR-Abgasrückführungsventils, das in der den Abgasauslasskanal (9) mit der Luftansaugkanal (3) verbindenden Leitung installiert ist, gleich sind.

3. Luftansaugsystem nach Anspruch 1, **dadurch gekennzeichnet, dass** der Bypasskanal (1) zwischen dem Verdichter (5) und einem Luftstromsensor oder Ladedrucksensor mit dem Luftansaugkanal (3) zurückverbunden ist.

## Revendications

1. Système d'admission d'air pour moteur à combustion interne d'un véhicule, comprenant une conduite d'admission (3) et un canal de dérivation (1), le canal de dérivation (1) étant acheminée hors de la conduite d'admission (3) en aval du compresseur (5) et du radiateur (6) de l'air de suralimentation, et en amont du volet (8a) dans un moteur à allumage commandé ME (7) ou en amont du capteur de pression (8b) dans un moteur à allumage par compression MD (7) et raccordé en retour au canal d'admission (3) en amont du compresseur (5), et dans le canal de dérivation (1) est située une valve de circulation (4) connectée de manière filaire ou sans fil avec un système numérique de calcul et de contrôle, et la valve de circulation (4) constitue une valve de récirculation des gaz brûlés EGR, laquelle valve de récirculation des gaz brûlés EGR est initialement installée sur la conduite reliant un canal d'échappement des gaz brûlés (9) avec la conduite d'admission (3) d'air, le canal d'échappement des gaz brûlés (9) du collecteur d'échappement des gaz brûlés dans la direction de la valve EGR étant obturé, et l'entrée des gaz brûlés dans la valve EGR est reliée avec un té de tuyau se trouvant dans la conduite d'admission (3) d'air, le système numérique de calcul et de contrôle étant constitué par un module de contrôle électronique ECU du véhicule, lequel module de contrôle électronique ECU du véhicule est équipé d'un logiciel et des valeurs de seuil de la valve de récirculation (4), qui sont identiques avec celles du mode de fonctionnement de la valve de récirculation EGR, installée initialement sur la conduite reliant le canal d'échappement (9) des gaz brûlés avec la conduite d'admission (3) d'air.

2. Système selon la revendication 1, **caractérisé en ce que** le système d'admission d'air pour moteur (7) à combustion interne d'un véhicule consiste **en ce que** la valve EGR fonctionnant en tant que la valve de recirculation (4), adopte partiellement la fonction de contrôle de la pression de suralimentation du moteur à combustion interne (7), la valve EGR fonctionnant en tant que la valve de circulation est également totalement ouverte ou partiellement ouverte durant un régime de charge incomplet du moteur (7) ainsi que durant un fonctionnement a vide, en raison du même contrôle par module de contrôle électronique ECU du véhicule étant le système de calcul et de contrôle lequel possède un logiciel et des valeurs de seuil de la valve de circulation (4), identiques avec celles du mode de fonctionnement de la valve de récirculation des gaz brûlés EGR, installée dans la conduite reliant le canal d'échappement (9) avec la conduite d'admission (3).

3. Système selon la revendication 1, **caractérisé en ce que** le canal de dérivation (1) est raccordé en retour au canal d'admission (3), entre le compresseur (5) et le capteur de débit d'air ou le capteur de la pression de suralimentation.
